# FASCICULE DE BREVET EUROPEEN

(11) **EP 1 903 504 B1**
(45) Date de publication et mention de la délivrance du brevet: **25.01.2012**
(21) Numéro de dépôt: 07116694.6
(22) Date de dépôt: 18.09.2007
(51) Int. Cl.: G06T 9/00

(54) **Procédé d'enregistrement d'un flux de données graphiques notamment pour des applications informatiques**
Verfahren zur Aufzeichnung eines Grafikdatenflusses, insbesondere für IT-Anwendungen
Method of recording a stream of graphic data, in particular for computer applications

(30) Priorité: 19.09.2006 FR 0608184
(43) Date de publication de la demande: 26.03.2008
(73) Titulaire: THALES, 92200 Neuilly sur Seine (FR)
(72) Inventeur: Charpentier, Eric, 91420 Morangis (FR)
(74) Mandataire: Lucas, Laurent Jacques

(56) Documents cités:
- HASKELL B G ET AL: "INTERFRAME CODING OF VIDEOTELEPHONE PICTURES" PROCEEDINGS OF THE IEEE, IEEE. NEW YORK, US, vol. 60, no. 7, juillet 1972 (1972-07), pages 792-800, XP009078916 ISSN: 0018-9219
- CANDY J C ET AL: "TRANSMITTING TELEVISION AS CLUSTERS OF FRAME-TO-FRAME DIFFERENCES" BELL SYSTEM TECHNICAL JOURNAL, AMERICAN TELEPHONE AND TELEGRAPH CO. NEW YORK, US, vol. 50, no. 6, juillet 1971 (1971-07), pages 1889-1917, XP000973570
- JAIN A K: "IMAGE DATA COMPRESSION: A REVIEW" PROCEEDINGS OF THE IEEE, IEEE. NEW YORK, US, vol. 69, no. 3, 1 mars 1981 (1981-03-01), pages 349-389, XP000601796 ISSN: 0018-9219
- GREEN J L: "CAPTURING DIGITAL VIDEO USING DVI" DR. DOBB'S JOURNAL, M&T PUBL., REDWOOD CITY, CA,, US, vol. 17, no. 7, juillet 1992 (1992-07), pages 16-18,20,22,2, XP000884266 ISSN: 1044-789X

## Description

La présente invention concerne un procédé d'enregistrement d'un flux de données graphiques notamment pour des applications informatiques dans le domaine du contrôle aérien.

Les recommandations européennes en matière de contrôle du trafic aérien imposent aux logiciels de gestion du trafic aérien de pouvoir enregistrer l'activité des contrôleurs aériens en temps réel. L'ensemble des informations affichées sur chaque station de travail de contrôleur doit donc être enregistré de manière continue, tel un film. L'ensemble des informations enregistrées est ensuite restitué à la manière d'un magnétoscope de façon à pouvoir visionner les situations ayant par exemple donné lieu à des incidents de gestion de l'espace aérien comme des collisions entre aéronefs. Cette restitution d'informations est considérée comme un rejeu vidéo.

Jusqu'à présent, ce type d'enregistrement était pris en compte directement par le logiciel de gestion du trafic aérien présent sur chaque station de travail de contrôleur.

Un logiciel de trafic aérien possède plusieurs fonctions. Parmi ces fonctions, le logiciel de gestion du trafic aérien permet notamment de présenter au contrôleur aérien un certain nombre d'informations telles que la cartographie de la région, les plans de vol des aéronefs, les balises, les routes et autres informations liées à la description de l'espace aérien, mais aussi les différentes positions des aéronefs en vol. Ces informations forment l'ensemble des données aéronautiques. Un logiciel de gestion du trafic aérien offre également des fonctionnalités permettant de gérer les différentes phases de contrôle d'un aéronef comme : la prise de contrôle d'un aéronef ou son transfert de contrôle vers un autre contrôleur. Le logiciel peut également fournir des fonctionnalités d'aide au contrôle aérien comme la détection de conflits entre les aéronefs qui permet notamment d'alerter le contrôleur lorsqu'une distance de sécurité n'est pas respectée entre deux aéronefs.

Afin d'offrir les différentes fonctionnalités citées, un logiciel de contrôle aérien peut comporter un composant logiciel de traitement et de gestion des données aéronautiques et une interface homme machine appelée par la suite IHM. Cette IHM permet au contrôleur de visualiser les données aéronautiques mais également d'effectuer des actions telles que la prise de contrôle d'un aéronef. Le logiciel de gestion du trafic aérien comporte également une application espion permettant d'intercepter toutes les informations transitant entre le composant logiciel de traitement de données et l'IHM. Cette application espion enregistre alors toutes les données qu'elle intercepte ainsi que les actions de l'opérateur dans un fichier. Ce fichier comporte au final un ensemble de données aéronautiques et d'actions opérateur qui constituent un scénario pouvant ensuite être rejoué. Cette méthode d'enregistrement et de rejeu possède de nombreux inconvénients dont celui d'être très coûteuse à mettre en oeuvre. En effet, chaque modification d'une information envoyée à l'IHM entraîne une modification de l'application espion qui doit également prendre en compte cette modification. Ensuite, lors des phases de tests et de qualification du logiciel de gestion du trafic aérien, il faut tester le composant de traitement, puis tester l'application espion afin de vérifier que les données sont correctement enregistrées et restituées. Tout ceci entraîne donc un coût important ainsi qu'une certaine lourdeur de mise en oeuvre. Un autre inconvénient de cette méthode réside dans le fait que les applications tierces, cohabitant sur la station de travail du contrôleur aérien avec le logiciel de gestion du trafic aérien, ne peuvent faire l'objet d'un enregistrement graphique, l'application espion étant dédiée au logiciel de gestion du trafic aérien.

Une autre solution consiste à utiliser des enregistreurs vidéo de type magnétoscope. Ces matériels vidéo sont très coûteux et leur mise en place est d'autant plus coûteuse que chaque station de travail de contrôleur doit posséder son propre enregistreur. Ces matériels supportent par ailleurs difficilement des résolutions élevées de l'image source comme c'est le cas sur une station de travail de contrôle aérien : dans le domaine du contrôle aérien, les résolutions courantes pour les écrans sont 2 048 × 2 048 pixels. De plus les enregistreurs vidéo proposent des taux de compression très faibles, ce qui est problématique pour le stockage des données recueillies, sachant que l'on peut stocker jusqu'à un mois d'enregistrements effectués vingt-quatre heures sur vingt-quatre.

Une troisième solution consiste à effectuer des captures des images successives affichées sur l'écran et à enregistrer cette succession d'images statiques dans un format d'image standard en disposant d'un algorithme de compression sans perte d'information. Cependant le taux de compression statique ainsi obtenu est largement insuffisant en regard des exigences du domaine. En effet, les logiciels du commerce effectuant des captures d'écran possèdent des taux de compression insuffisants pour les résolutions utilisées dans le domaine du contrôle aérien. De plus, l'utilisation d'un logiciel du commerce présente des difficultés en matière de maintenance et d'évolutivité. Ainsi il est souvent coûteux et long d'obtenir des évolutions face à des besoins nouveaux ou spécifiques. Ceci est particulièrement critique lorsqu'il s'agit de contrôler la sécurité des aéronefs.

Dans le commerce, il existe de nombreux logiciels de compression d'image vidéo. Cependant ces logiciels utilisent des algorithmes prévus pour traiter une succession d'images photographiques et non une succession d'images issues d'applications informatiques. La particularité des images d'applications informatiques est qu'elles comportent notamment du texte, des tracés vectoriels, des menus, des boîtes de dialogues, des curseurs. La transition entre deux images d'applications informatiques successives se résume principalement à des transitions brusques et localisées de couleurs ou de contraste, ce qui n'est pas le cas pour les images de type photographique qui sont davantage sujettes à des variations dans les nuances de couleurs. Les algorithmes du commerce couramment utilisés sont adaptés à traiter des images comportant beaucoup de couleurs et beaucoup de changement de nuances dans ces couleurs. Ces algorithmes, appliqués au traitement d'images issues d'applications informatiques, possèdent une compression induisant une perte d'information inacceptable pour l'enregistrement des données affichées sur les stations de travail des contrôleurs aérien. Avec de tels algorithmes, par exemple, un texte restitué après une compression et une décompression devient indéchiffrable. De plus les taux de compression proposés sont trop faibles pour la quantité de données devant être stockées. Les algorithmes du commerce présentent également des temps de traitement des images trop importants pour être mis en oeuvre sur des images issues d'une application temps réel.

Dans le document suivant: "INTERFRAME CODING OF VIDEOTELEPHONE PICTURES" PROCEEDINGS OF THE IEEE, IEEE. NEW YORK, US, vol. 60, no. 7, juillet 1972 (1972-07), pages 792-800, XP009078916 ISSN: 00189219, les auteurs, HASKELL B G ET AL, décrivent des méthodes de compression de flux vidéo pour des applications de télévision sur des téléphones portables.

Un objectif de l'invention est notamment de pallier les inconvénients précités. A cet effet, l'invention a pour objet un procédé d'enregistrement d'un flux de données graphiques composé d'une succession d'images informatiques. Le procédé selon l'invention comporte au moins les étapes suivantes :
- une première étape d'enregistrement de la première image du flux de données graphiques,
et pour chaque image du flux de données graphiques :
- une seconde étape de découpage d'une image courante en blocs de pixels,
- une troisième étape de comparaison bloc de pixels à bloc de pixels de l'images courante et de l'image précédente afin d'obtenir un ensemble de blocs de pixels de l'image courante présentant une ou plusieurs différences avec les blocs de pixels correspondant de l'image précédente,
- une quatrième étape de regroupement des blocs de pixels, obtenus à • la troisième étape en plusieurs ensembles de blocs de pixels selon un critère de proximité,
- une cinquième étape d'enregistrement dans un fichier des ensembles de blocs de pixels issus de la quatrième étape de regroupement.

Un découpage de l'image peut être un quadrillage de cette image, chaque bloc de pixel représentant une case du quadrillage.

Les ensembles de blocs différents d'une image à l'image suivante peuvent être des rectangles englobant les blocs de pixels différents d'une image à l'image suivante.

Le nombre de rectangles étant fixé, lorsque le nombre maximum de rectangles est atteint les blocs de pixels, différant d'une image à l'image suivante, peuvent être ajoutés au rectangle le plus proche.

Les rectangles en intersection ou contigus peuvent être fusionnés.

La comparaison bloc de pixels à bloc de pixels des deux images successives s'effectue en parcourant les blocs de pixels linéairement.

Une image complète du flux de données graphiques peut être enregistrée à intervalles de temps réguliers.

D'autres caractéristiques et avantages de l'invention apparaîtront à l'aide de la description qui suit, donnée à titre illustratif et non limitatif, faite en regard des dessins annexés qui représentent :
• la figure 1, un exemple d'un schéma d'architecture d'un logiciel de gestion du contrôle aérien selon l'art antérieur ;
• la figure 2, un exemple d'un schéma d'architecture d'un logiciel de gestion du contrôle aérien selon l'invention ;
• la figure 3, un synoptique d'un algorithme de compression d'image selon l'invention ;
• la figure 4, un synoptique de l'algorithme de gestion des blocs différents selon l'invention ;
• la figure 5a, un exemple de comparaison de deux images vidéo en utilisant le procédé selon l'invention ;
• la figure 5b, un exemple de regroupement de blocs différents selon l'invention ;
• la figure 5c, un exemple d'enregistrement d'une image en utilisant le procédé selon l'invention ;
• la figure 6, un exemple de format de fichier décrivant une image enregistrée en utilisant le procédé selon l'invention.

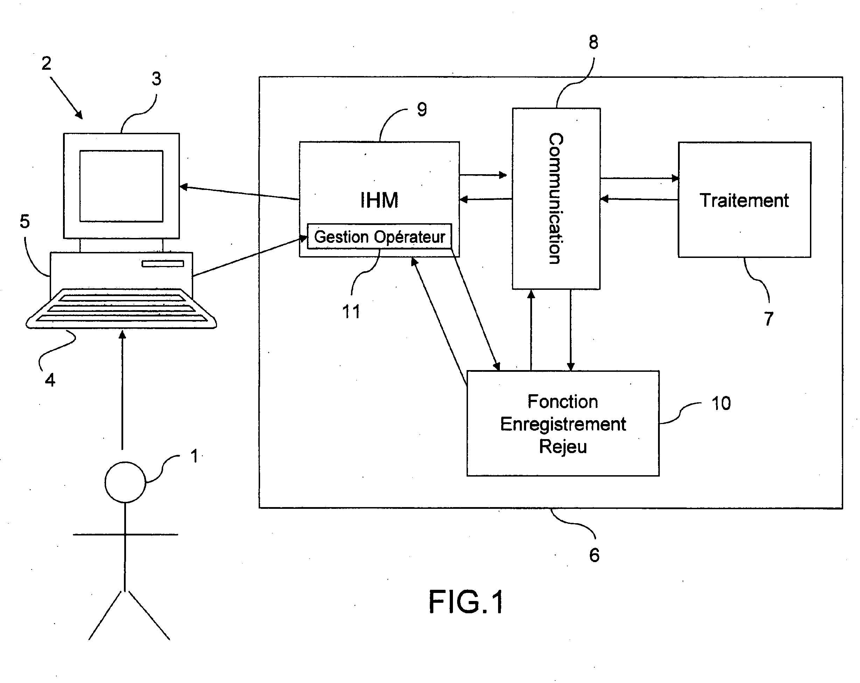

La figure 1 présente une vue schématique d'un exemple d'architecture d'un logiciel de gestion du contrôle aérien selon l'art antérieur. Sur la figure 1 sont représentés : un opérateur 1, qui peut être un contrôleur aérien, ainsi que sa station de travail 2 comportant un écran 3, un périphérique d'entrée 4 qui peut comprendre par exemple une souris et un clavier, et une unité centrale 5 sur laquelle s'exécute le logiciel de gestion du trafic aérien 6.

Le logiciel de gestion du trafic aérien 6 comporte plusieurs composants logiciels. Pour simplifier la description « composant logiciel » est appelé simplement « composant ». Parmi ces composants logiciels se trouvent :
● un composant de gestion et de traitement des données aéronautiques 7,
● un composant de communication 8,
● un composant IHM 9 et,
● un composant 10 appelé « fonction enregistrement-rejeu ».

Le composant 10 permet l'enregistrement des données affichées grâce à l'IHM 9, sous la forme d'un scénario, ainsi que le rejeu du scénario enregistré en restituant les données vers l'IHM 9.

Le composant de traitement 7 a notamment en charge la gestion de toutes les données aéronautiques. Parmi ces données on trouve les données décrivant l'espace aérien comme les balises, les points de passages, les routes aériennes et les zones à éviter. Les données aéronautiques comportent également toutes les données concernant les aéronefs comme leur plan de vol, leur altitude, leur position, ainsi que les informations de contrôle concernant les aéronefs. Le composant de traitement 7 assure également la gestion des données cartographiques comme les aéroports, les villes, les côtes et les frontières. Ce composant 7 fourni aussi à l'opérateur des fonctionnalités de gestion du contrôle d'un aéronef permettant par exemple au contrôleur de prendre le contrôle d'un aéronef. Le contrôleur peut également modifier les données d'un plan de vol d'un aéronef en fonction des ordres de modification de trajectoire qu'il donne à l'aéronef. Le composant de traitement 7 permet aussi de proposer au contrôleur des outils d'aide au contrôle comme une fonction de détection de conflits entre deux trajectoires d'aéronefs, une fonction de détection de la proximité entre deux aéronefs. Le contrôleur peut ainsi anticiper des situations potentiellement dangereuses en donnant des instructions de déroutement à l'un des deux aéronefs par exemple.

Toutes les données gérées par le composant de traitement 7 sont envoyées à l'IHM 9 par le composant de communication 8. Ce composant 8 permet également à la fonction d'enregistrement rejeu 10 de récupérer toutes les données transitant entre le composant de traitement 7 et l'IHM 9 afin de les enregistrer en vue d'un futur rejeu.

Le composant IHM 9 permet l'affichage des données reçues du composant de traitement 7 sur l'écran 3 afin d'être visualisées par le contrôleur 1.

Le contrôleur 1, dans le cadre de sa fonction de gestion du trafic aérien, effectue des actions comme ouvrir une fenêtre sur l'écran, sélectionner un objet affiché ou bien saisir des données grâce au périphérique 4. Ces actions ou saisies de données sont traitées au niveau de l'IHM 9 par un composant de gestion opérateur 11. L'IHM transmet ensuite les données correspondant à la saisie ou à une action opérateur au composant de traitement 7 par l'intermédiaire du composant de communication 8. La fonction enregistrement rejeu 10 enregistre également toutes les données correspondant aux actions et aux saisies de données du contrôleur afin de pouvoir les rejouer ultérieurement.

La fonction enregistrement rejeu 10 possède deux modes de fonctionnement : un mode d'enregistrement lorsque le logiciel de gestion du contrôle aérien est opérationnel et un autre mode de restitution des données enregistrées lors du rejeu d'une séquence de travail du contrôleur. Lors du rejeu le composant de traitement 7 est donc inactif et les entrées venant du périphérique 4 sont ignorées : toutes les données affichées sur l'écran 3 viennent de la fonction d'enregistrement rejeu 10 via le composant de communication 8 et l'IHM 9.

Les données recueillies par la fonction d'enregistrement rejeu 10 sont stockées dans un fichier qui sera relu par la fonction 10 en mode de restitution des données. Le format d'enregistrement des données dépend donc du format d'échange de données défini pour le composant de communication 8. A chaque ajout d'une donnée ou à chaque modification du format d'échange, le format d'enregistrement doit être modifié : la fonction d'enregistrement rejeu 10 se trouve également modifiée. Les évolutions de la fonction d'enregistrement rejeu du logiciel de gestion du contrôle aérien 6 sont donc lourdes et coûteuses à mettre en oeuvre et à tester.

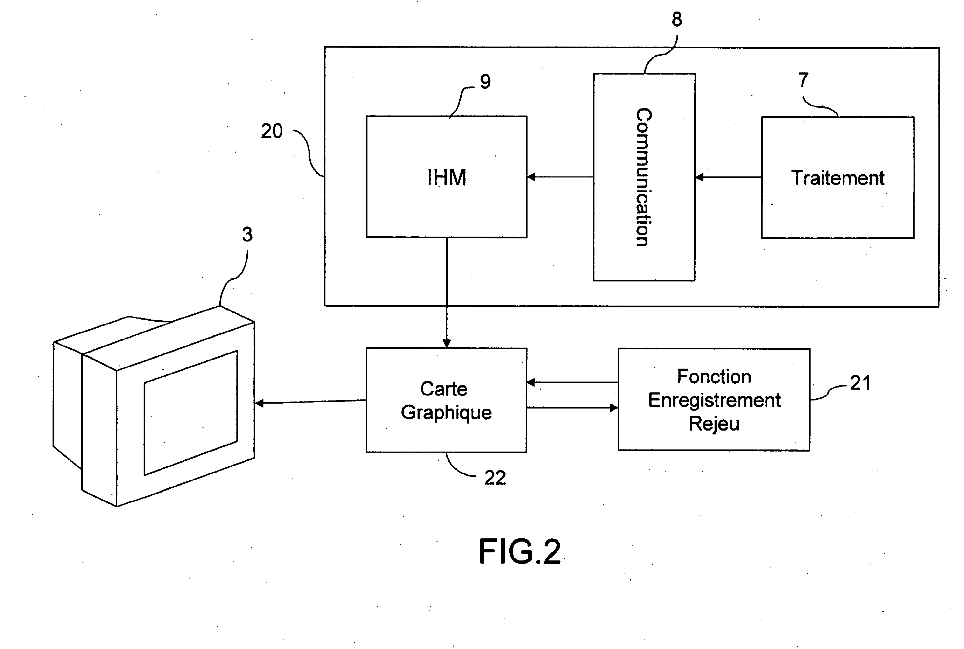

La figure 2 présente une autre architecture d'un logiciel de gestion du contrôle aérien 20 selon l'invention. Le logiciel de gestion du contrôle aérien comporte toujours un composant de traitement 7, un composant de communication 8 servant d'interface entre le composant de traitement 7 et le composant IHM 9. Le composant IHM 9 permet toujours d'afficher les informations qu'il reçoit sur un écran 3. Les interactions du logiciel avec l'opérateur n'ont pas été représentées sur la figure 2, car elles ne sont pas nécessaires à la présentation de l'architecture utilisée par la fonction d'enregistrement rejeu 21. Les interactions entre l'opérateur et le logiciel sont les mêmes que celles décrites sur la figure 1.

L'IHM 9, afin d'afficher les informations aériennes sur l'écran 3, utilise une carte graphique 22. Le procédé selon l'invention utilise judicieusement une architecture qui consiste à récupérer les données transitant par la carte graphique 22. Ces données sont les images devant être affichées sur l'écran 3. Une fonction d'enregistrement rejeu 21 est donc directement reliée à la carte graphique 22 afin de récupérer et d'enregistrer à intervalles réguliers les images affichées dans un fichier. Les images ainsi enregistrées sont rediffusées par la fonction d'enregistrement rejeu 21 vers la carte graphique 22 afin d'être affichées sur l'écran 3 lorsque la fonction d'enregistrement rejeu est en mode de restitution de données. Le fait de récupérer les données constituant chaque image directement sur la carte graphique 22 permet d'enregistrer toutes les données affichées sur l'écran du contrôleur, et notamment les actions du contrôleur comme le déplacement de son curseur ou bien l'ouverture d'une fenêtre.

Cette architecture permet de s'affranchir du format spécifique des données traitées pour s'intéresser uniquement à l'image résultante affichée sur l'écran. Ceci permet donc de rendre la fonction d'enregistrement rejeu 21 indépendante du logiciel de gestion du contrôle aérien 20. La fonction d'enregistrement rejeu n'est alors pas impactée par les modifications éventuelles du logiciel de gestion du contrôle aérien. De plus, elle peut également enregistrer des données issues d'une application tierce comme un éditeur de texte par exemple.

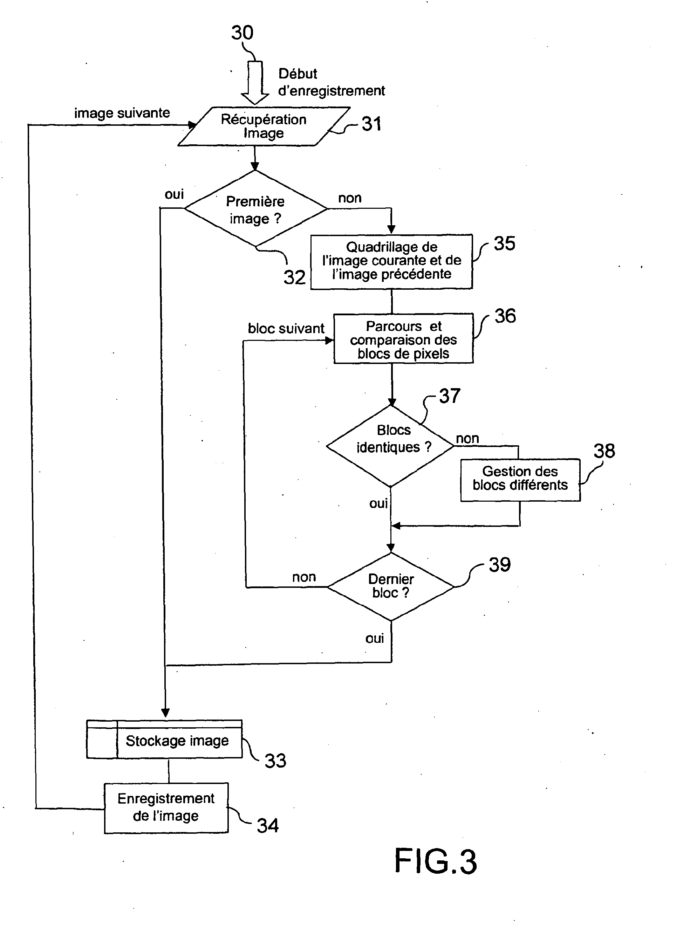

La figure 3 présente un exemple des différentes étapes d'un algorithme de compression et de stockage d'images selon l'invention. La fonction d'enregistrement rejeu 21 récupère donc une image sur la carte graphique puis effectue une compression et ensuite un stockage de l'image dans un fichier de données en déroulant un algorithme selon l'invention. Cet algorithme utilise un procédé itératif, chaque itération correspondant à la prise en compte d'une nouvelle image à traiter puis à enregistrer dans un fichier.

Au début de l'enregistrement 30, la fonction d'enregistrement rejeu 22 reçoit une première image dans une première étape 31 de récupération d'une image. Ensuite l'algorithme teste, dans une deuxième étape 32, si cette image est la première ou non.

Dans le cas d'une première image du flux d'image, cette image est sauvegardée au cours d'une étape 33 de stockage en mémoire afin de pouvoir la comparer avec l'image suivante. Ensuite cette image est enregistrée dans un fichier au cours d'une étape d'enregistrement 34. Une fois l'enregistrement terminé, l'algorithme revient à l'étape 31 de récupération d'image afin d'obtenir l'image suivante.

Si l'image courante n'est pas la première image du flux, cette image est alors directement découpée en plusieurs blocs de pixels. Ce découpage peut être fait sous la forme d'un quadrillage 35 de l'image en cases de 32 pixels par 32 pixels. La taille des cases du quadrillage est paramétrable suivant la taille des images à traiter afin d'optimiser le temps de traitement des images par exemple. Chaque case du quadrillage ainsi obtenue représente donc un bloc de pixels de l'image. Si l'image précédente n'a pas été découpée, un quadrillage de cette image est effectué de la même manière que celle décrite précédemment. L'ensemble des blocs de pixels est ensuite parcouru au cours d'une étape 36 afin de comparer bloc à bloc l'image courante et l'image précédente. Le découpage des images reste constant d'une image à l'autre afin de pouvoir effectuer la comparaison bloc à bloc.

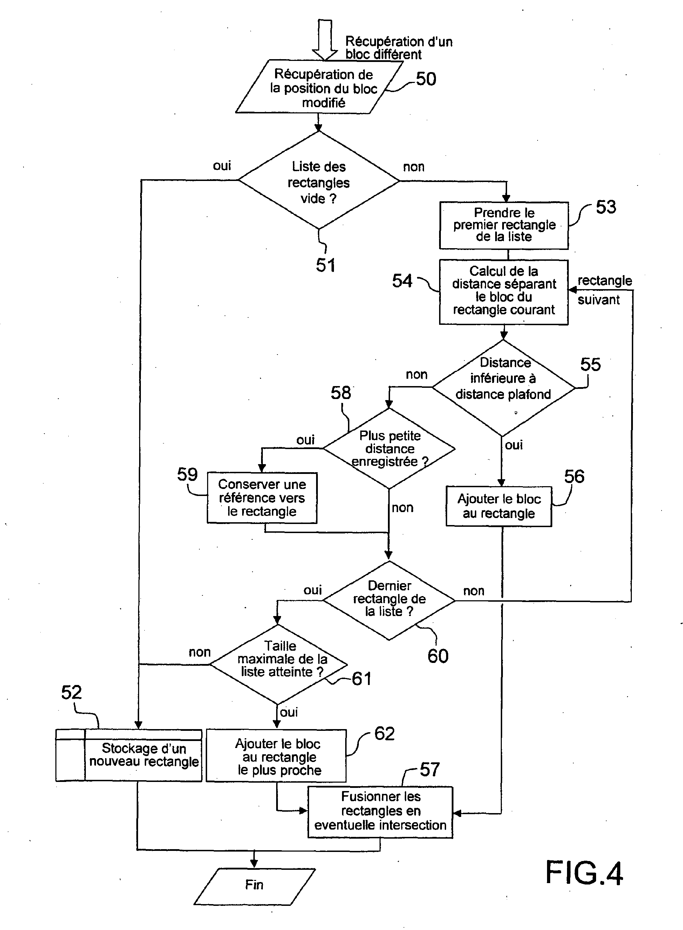

Si les deux blocs comparés ne sont pas identiques, la condition « blocs identiques » 37 n'est pas remplie et donc le bloc courant de l'image courante est transmis à un algorithme de gestion des blocs différents présenté sur la figure 4.

Si les blocs sont identiques, l'algorithme passe au bloc suivant et ainsi de suite jusqu'à ce que la condition 39 d'atteinte du dernier bloc de l'image courante soit vérifiée. Lorsque l'image courante a été entièrement parcourue par l'algorithme, elle est stockée en mémoire au cours d'une étape 40 afin d'être comparée avec l'image suivante. Puis dans une autre étape 41, seuls les blocs de l'image courante ayant présentés une différence avec les blocs de l'image précédente sont enregistrés dans le fichier. Ensuite l'algorithme passe à l'image suivante et ce jusqu'à ce que l'enregistrement soit arrêté.

Le présent algorithme permet donc d'opérer une compression dynamique, dans le sens où elle dépend du nombre de blocs différents découverts dans l'image en cours de traitement. Ceci permet de réduire la quantité d'informations à enregistrer.

La figure 4 représente un algorithme de gestion des blocs différents selon l'invention. Un bloc différent est une case de l'image courante présentant des différences avec une case de l'image précédente positionnée au même endroit et possédant les mêmes dimensions que la case de l'image courante. Le principe général de cet algorithme est de construire des rectangles englobant des blocs différents. Le nombre de rectangles ainsi construits est limité afin d'optimiser le stockage des données et le temps de calcul nécessaire à la comparaison de deux images.

Lorsque l'algorithme représenté sur la figure 3 trouve un bloc différent, il fait alors appel à un algorithme 38 de gestion des blocs différents, représenté sur la figure 4. Dans une première étape 50, l'algorithme de gestion des blocs différents récupère la position du bloc différent. Puis l'algorithme, dans une deuxième étape 51, récupère une liste de rectangles déjà constitués. Dans cette liste, chaque rectangle est un rectangle englobant un ensemble de blocs différents de l'image. Un rectangle représente donc une partie de l'image.

Si la liste des rectangles est vide, la troisième étape 52 consiste à réaliser un premier rectangle comprenant uniquement le nouveau bloc différent. Ce nouveau rectangle est ensuite stocké dans la liste des rectangles.

Si la liste des rectangles n'est pas vide, l'algorithme récupère le premier rectangle de la liste au cours d'une quatrième étape 53, le premier rectangle devient alors le rectangle courant. Une cinquième étape suivante 54 est de calculer la distance séparant le bloc différent du rectangle courant. Cette distance exprimée en nombre de pixels est ensuite comparée, au cours d'une sixième étape 55, à une distance plafond au-delà de laquelle on considère que le critère de proximité entre le rectangle et le bloc différent n'est pas satisfait. Cette distance peut être de l'ordre de un pixel par exemple.

Si le critère de proximité est satisfait, le bloc différent est ajouté, au cours d'une septième étape 56, au rectangle courant dont la géométrie est recalculée afin de contenir le bloc ajouté. La géométrie du rectangle est redéfinie afin d'englober le rectangle initial plus le bloc ajouté. Ensuite l'algorithme parcourt tous les rectangles stockés afin de fusionner les rectangles en intersection ou contigus dans une huitième étape 57. Une fusion entre deux rectangles s'effectue en construisant un troisième rectangle englobant les deux premiers rectangles. Le rectangle ainsi construit remplace alors dans la liste des rectangles les deux premiers rectangles.

Si le critère de proximité n'est pas respecté, une neuvième étape suivante 58 permet de comparer la distance à une distance enregistrée. Si cette distance est la plus petite des distances enregistrées, l'algorithme conserve une référence vers le rectangle courant dans une dixième étape 59. Dans les deux cas, on passe ensuite à une onzième étape 60 permettant d'itérer sur les rectangles de la liste.

Si le dernier rectangle de la liste n'a pas été atteint par l'algorithme, l'algorithme revient alors à la cinquième étape 54 de calcul de la distance séparant le bloc différent courant du rectangle suivant qui devient alors le rectangle courant.

Si le dernier rectangle a été atteint et testé, on vérifie au cours d'une douzième étape 61 si la taille maximale de la liste de rectangles a été atteinte. Si c'est le cas, cela signifie que le nombre maximal de rectangles est atteint. Ce nombre maximal de rectangle peut être par exemple de l'ordre de cinq rectangles. Le nombre de rectangles est volontairement réduit afin de limiter le temps d'enregistrement de ces derniers dans le fichier.

Si le nombre maximum de rectangles a été atteint, dans une treizième étape suivante 62, l'algorithme récupère la référence du rectangle le plus proche du bloc différent courant, conservée au cours de la dixième étape 59, afin d'ajouter le bloc différent courant au rectangle pointé par la référence enregistrée. Vient ensuite la huitième étape 57 de fusion des rectangles en éventuelle intersection.

Si le nombre maximum de rectangles n'a pas été atteint, un nouveau rectangle est constitué avec le bloc différent courant comme au cours de la troisième étape 52. Ce nouveau rectangle est ensuite stocké dans la liste des rectangles.

Les rectangles ainsi constitués représentent donc un différentiel entre l'image précédente et l'image courante. Seules les parties de l'image contenues dans les rectangles sont donc enregistrées, afin de limiter la taille de stockage de chaque image. L'image courante est ensuite reconstituée au cours du rejeu à partir de l'image précédente et des rectangles de l'image courante.

Cet algorithme permet donc d'optimiser le temps nécessaire à l'enregistrement d'une image mais aussi d'optimiser la taille de chaque image enregistrée.

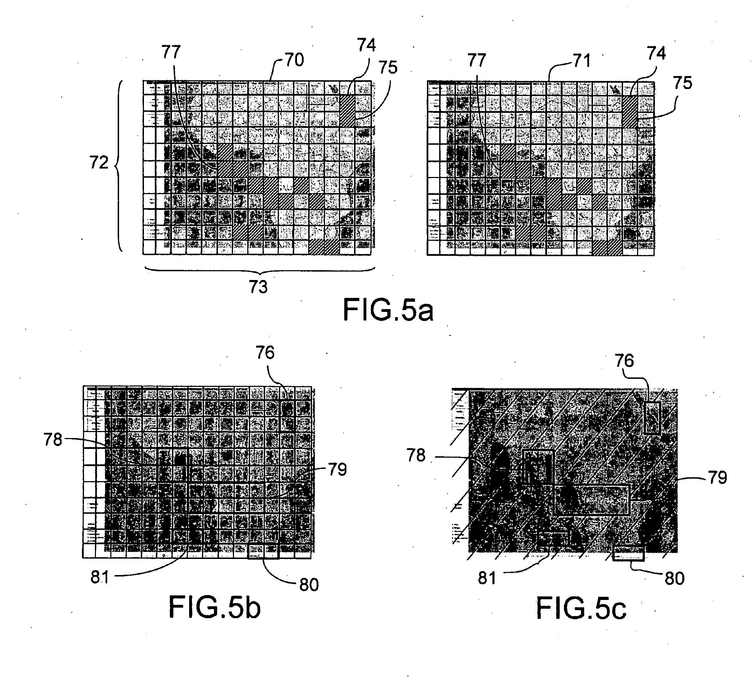

Les figures 5a, 5b et 5c représentent un exemple de constitution des rectangles qui sont enregistrés à la place de l'image complète. La figure 5a présente une première image 70 et une deuxième image 71. La deuxième image 71 est considérée comme l'image courante à enregistrer. Les deux images sont découpées sous la forme d'un quadrillage. Le quadrillage est représenté sous la forme de n lignes 72 de m blocs 73 chacune. L'algorithme parcourt chaque ligne de blocs, en commençant par le haut de l'image et pour chaque ligne, l'algorithme parcourt les blocs de gauche à droite, par exemple. L'algorithme de détection des blocs différents, présenté sur la figure 3, a identifié dans cet exemple un premier bloc 74 présentant des pixels différents entre les deux images 70, 71. Un premier rectangle est donc constitué comportant uniquement le bloc 74. En parcourant la deuxième ligne du quadrillage, l'algorithme de détection des blocs différents identifie un deuxième bloc 75 comportant des différences entre les deux images 70, 71. Ce deuxième bloc 75 étant contiguë du premier rectangle constitué uniquement du premier bloc 74, le deuxième bloc 75 est ajouté au premier rectangle formant un rectangle 76 représenté sur la figure 5b. En parcourant le reste du quadrillage de la même manière, l'algorithme découvre trois autres blocs différents constituant alors un deuxième rectangle 78. Et ainsi de suite jusqu'à ce que le quadrillage soit entièrement parcouru par l'algorithme. On obtient alors par exemple cinq rectangles 76, 78, 79, 80, 81 représentants les différences entre la première image 70 et la deuxième image 71. Les parties de la seconde image contenue dans les rectangles 76, 78, 79, 80, 81 représentées sur la figure 5c sont ensuite enregistrées dans un fichier de données sous la forme de cinq images.

Le parcours linéaire, de gauche à droite puis de haut en bas, du quadrillage permet un parcours rapide de chaque image et permet ainsi d'obtenir une capacité d'enregistrer d'environ cinq images à la seconde. Ce résultat est suffisant pour permettre une visualisation satisfaisante, au regard des besoins relatifs au domaine du contrôle aérien, du scénario lors du rejeu.

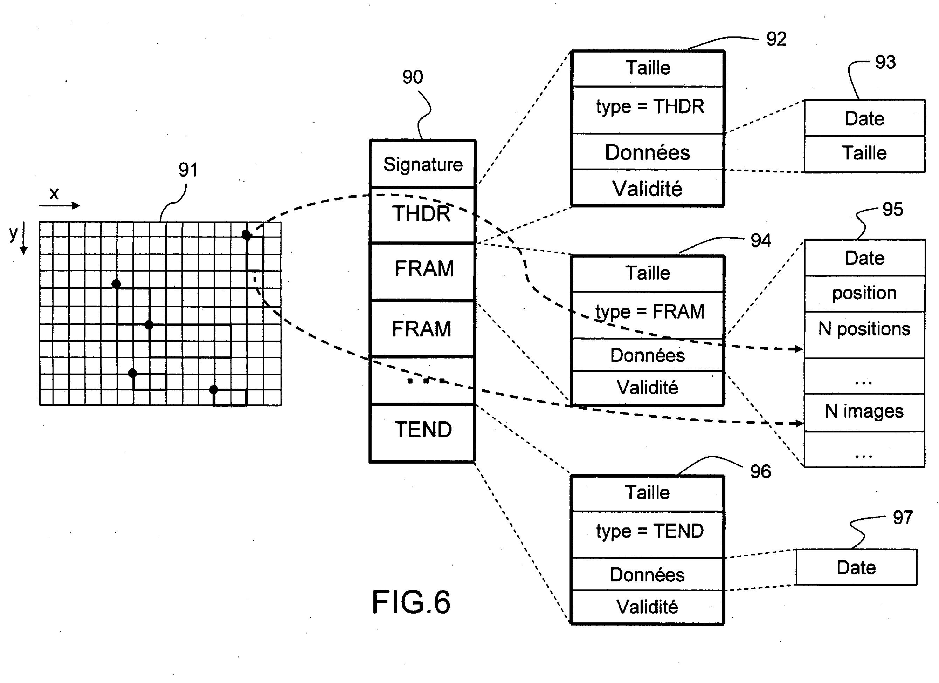

La figure 6 représente un exemple d'une structure 90 d'un fichier de données utilisé pour enregistrer une image 91 en utilisant le procédé selon l'invention. La structure des données 90 décrivant l'image peut comporter :
■ une signature de message qui permet de nommer le format de données utilisé afin de pouvoir lire ce fichier avec une application dédiée, dans notre exemple la signature peut être « TMNG »,
■ un premier tronçon nommé THDR permettant de stocker des informations générales sur les images enregistrées,
■ plusieurs tronçons nommés FRAM, chacun d'eux contenant par exemple une description de l'image enregistrée,
■ un tronçon nommé TEND contenant par exemple une date de fin d'enregistrement.
Chaque tronçon THDR, FRAM, TEND, peut posséder la même structure de base comprenant :
■ une taille de tronçon,
■ un type du tronçon qui peut être par exemple THDR, FRAM ou TEND,
■ les données spécifiques à chaque type de tronçon, et
■ un champ permettant de vérifier la validité des données contenues dans le tronçon pour détecter une éventuelle altération de ces dernières pendant l'encodage ou le décodage.

Le premier tronçon THDR possède une structure 92 qui lui permet de stocker dans la partie « Données » 93 une date qui peut être une date relative à la date de début d'enregistrement afin de pouvoir synchroniser le rejeu vidéo avec un enregistrement vocal par exemple. La partie « Données » 93 du tronçon THDR permet également de stocker une taille qui peut être la taille de l'écran par exemple.

Les tronçons FRAM possèdent chacun une structure 94 permettant de stocker l'image compressée par l'algorithme selon l'invention précédemment décrit. La partie « Données » 95 d'un tronçon FRAM peut notamment contenir une date, une position qui peut être la position du curseur sur l'image, ainsi que N positions suivies de N images qui correspondent aux N rectangles obtenus par l'algorithme décrit sur la figure 4. Chacune des N positions correspond à la position du coin supérieur gauche de chacun des N rectangles. Chaque position est repérée par ses coordonnées (x, y), y représentant l'abscisse et x représentant l'ordonnée du coin supérieur gauche du rectangle, la référence étant située dans le coin supérieur gauche de l'image 91. Les unités utilisées sont la longueur et la largeur d'une cellule du quadrillage de l'image 91. Chaque image est enregistrée dans un format d'image standard permettant d'effectuer une compression supplémentaire des données enregistrées. La date spécifiée au début de chaque tronçon FRAM correspond à la date de début d'affichage de l'image décrite par le tronçon FRAM en question. Une image reste affichée jusqu'à la date d'affichage d'une image suivante.

Une image entière, c'est à dire un tronçon FRAM 94 comportant une seule position (0,0) et une seule image, est enregistrée à intervalles réguliers. Ceci permet judicieusement de commencer un rejeu à partir d'un instant postérieur à la date de début d'enregistrement, une image complète étant nécessaire au démarrage du rejeu. Ceci permet également de pallier à un éventuel problème d'enregistrement.

Le troisième tronçon TEND possède une structure 96 qui permet notamment de spécifier la fin de la description de l'image 91. Ce tronçon peut notamment contenir, dans la partie « Données » 97 qui lui est propre, une date, relative à la date de début de l'enregistrement, représentant la date de fin d'enregistrement.

Le format de données utilisé afin de stocker les différentes images permet ainsi de rejouer un scénario comportant des images successives à la manière d'un film.

Le procédé selon l'invention peut éventuellement faire l'objet d'une synchronisation avec des données sonores afin de restituer pendant le rejeu la conversation entre le contrôleur et l'équipage d'un aéronef par exemple.

Le procédé selon l'invention peut être utilisé sur toute station de travail, nécessitant une fonction d'enregistrement et de rejeu, quelle qu'en soit l'application. Le procédé selon l'invention peut par exemple être utilisé sur des stations de surveillance d'un réseau de télécommunications.

Le procédé selon l'invention présente pour principal avantage d'être indépendant des données à enregistrer et à restituer. Il est de ce fait peu coûteux à développer et à maintenir en condition opérationnelle et présente également l'avantage de pouvoir enregistrer n'importe quel type de données issues de n'importe quelle application graphique.

Le procédé selon l'invention possède avantageusement des résultats en matière de taux de compression, d'intégrité de l'information et de temps de traitement qui répondent parfaitement aux exigences du domaine du contrôle aérien.

Le procédé selon l'invention est particulièrement adapté à l'enregistrement et au rejeu d'un logiciel de gestion du trafic aérien étant donné qu'il peut prendre en compte des images d'une grande résolution, tout en conservant une bonne qualité d'image lors de la restitution.

## Revendications

1. Procédé d'enregistrement d'un flux de données graphiques composé d'une succession d'images informatiques (70, 71), ledit procédé comportant au moins les étapes suivantes :
• une première étape (34) d'enregistrement de la première image du flux de données graphiques ;
• une deuxième étape (35) de découpage d'une image courante en blocs de pixels ;
• une troisième étape (36) de comparaison bloc de pixels à bloc de pixels de l'image courante (71) et de l'image précédente (70) afin d'obtenir des blocs de pixels de l'image courante présentant une ou plusieurs différences avec les blocs de pixels correspondant de l'image précédente ;
**caractérisé en ce qu'**il comporte en outre les étapes suivantes supplémentaires pour chaque image du flux de données graphiques :
• une quatrième étape (38) de regroupement des blocs de pixels, obtenus à la troisième étape (36), en plusieurs rectangles englobant les blocs de pixels selon un critère de proximité ;
• une cinquième étape (34) d'enregistrement dans un fichier des rectangles englobant les blocs de pixels issus de la quatrième étape (38) de regroupement.

2. Procédé selon la revendication précédente, **caractérisé en ce que** le découpage de l'image est un quadrillage (72, 73) de cette image, chaque bloc de pixel (74, 75) représentant une case du quadrillage.

3. Procédé selon les revendications 1 à 2, **caractérisé en ce que** le nombre de rectangles étant fixé, lorsque le nombre maximum de rectangles est atteint les blocs de pixels, différant d'une image (70) à l'image suivante (71), sont ajoutés au rectangle le plus proche.

4. Procédé selon les revendications 1 à 3, **caractérisé en ce que** les rectangles en intersection ou contigus sont fusionnés.

5. Procédé selon l'une quelconque des revendications précédentes, **caractérisé en ce que** la comparaison bloc de pixels à bloc de pixels des deux images successives (70, 71) s'effectue en parcourant les blocs de pixels linéairement.

6. Procédé selon l'une quelconque des revendications précédentes, **caractérisé en ce qu'**une image complète du flux de données graphiques est enregistrée à intervalles de temps réguliers.

## Claims

1. A method for recording a graphics data stream that is composed of a succession of computer images (70, 71), said method comprising at least the following steps:
• a first step (34) of recording the first image of the graphics data stream;
• a second step (35) of dividing a current image into blocks of pixels;
• a third step (36) of comparing the current image (71) and the previous image (70), pixel block by pixel block, so as to obtain pixel blocks of the current image having one or more differences with the corresponding pixel blocks of the previous image;
**characterised in that** it further comprises the following additional steps for each image of the graphics data stream:
• a fourth step (38) of combining the pixel blocks obtained during the third step (36) into a plurality of rectangles encompassing the pixel blocks according to a proximity criterion;
• a fifth step (34) of recording in a file the rectangles encompassing the pixel blocks that originate from the fourth combining step (38).

2. The method according to the preceding claim, **characterised in that** the image is divided so as to form a grid (72, 73) of said image, each pixel block (74, 75) representing a square of said grid.

3. The method according to claims 1 to 2, **characterised in that**, since the number of rectangles is fixed, the pixel blocks that differ from one image (70) to the next (71) are added to the nearest rectangle when the maximum number of rectangles is reached.

4. The method according to claims 1 to 3, **characterised in that** the intersecting or contiguous rectangles are merged.

5. The method according to any one of the preceding claims, **characterised in that** the pixel block by pixel block comparison of the two successive images (70, 71) is undertaken by going through the pixel blocks in a linear manner.

6. The method according to any one of the preceding claims, **characterised in that** a complete image of the graphics data stream is recorded at regular time intervals.

## Patentansprüche

1. Verfahren zum Aufzeichnen eines Grafikdatenstroms bestehend aus einer Folge von elektronischen Bildern (70, 71), wobei das Verfahren wenigstens die folgenden Schritte beinhaltet:
• einen ersten Schritt (34) des Aufzeichnens des ersten Bildes des Grafikdatenstroms;
• einen zweiten Schritt (35) des Unterteilens eines aktuellen Bildes in Pixelblöcke;
• einen dritten Schritt (36) des Vergleichens des aktuellen Bildes (71) und des vorherigen Bildes (70) Pixelblock für Pixelblock, um Pixelblöcke des aktuellen Bildes mit einem oder mehreren Unterschieden zu den entsprechenden Pixelblöcken des vorherigen Bildes zu erhalten;
**dadurch gekennzeichnet, dass** es ferner die folgenden zusätzlichen Schritte für jedes Bild des Grafikdatenstroms beinhaltet:
• einen vierten Schritt (38) des Gruppierens der im dritten Schritt (36) erhaltenen Pixelblöcke zu mehreren die Pixelblöcke umschließenden Rechtecken gemäß einem Näherungskriterium;
• einen fünften Schritt (34) des Aufzeichnens der aus dem vierten Gruppierungsschritt (38) stammenden, die Pixelblöcke umschließenden Rechtecke in einer Datei.

2. Verfahren nach dem vorherigen Anspruch, **dadurch gekennzeichnet, dass** das Bild in Form eines Rasters (72, 73) dieses Bildes unterteilt wird, wobei jeder Pixelblock (74, 75) eine Zelle des Rasters umfasst.

3. Verfahren nach den Ansprüchen 1 bis 2, **dadurch gekennzeichnet, dass**, da die Zahl der Rechtecke fest ist, die Pixelblöcke, die sich von einem Bild (70) zum folgenden Bild (71) unterscheiden, zum nächstliegenden Rechteck addiert werden, wenn die maximale Anzahl Rechtecke erreicht ist.

4. Verfahren nach den Ansprüchen 1 bis 3, **dadurch gekennzeichnet, dass** die sich schneidenden oder aneinander angrenzenden Rechtecke zusammengeführt werden.

5. Verfahren nach einem der vorherigen Ansprüche, **dadurch gekennzeichnet, dass** der Vergleich der beiden aufeinander folgenden Bilder (70, 71) Pixelblock für Pixelblock durch Durchlaufen der Pixelblöcke auf lineare Weise erfolgt.

6. Verfahren nach einem der vorherigen Ansprüche, **dadurch gekennzeichnet, dass** ein komplettes Bild des Grafikdatenstroms in regelmäßigen Zeitabständen aufgezeichnet wird.
